# EUROPÄISCHE PATENTSCHRIFT

(11) **EP 1 601 213 B1**
(45) Veröffentlichungstag und Bekanntmachung des Hinweises auf die Patenterteilung: **03.05.2006**
(21) Anmeldenummer: 04102223.7
(22) Anmeldetag: 19.05.2004
(51) Int. Cl.: H04Q 7/24

(54) **Verfahren und System zur automatisierten Rufumleitung**
Method and system for automatic call forwarding
Méthode et système pour le reroutage automatique des appels

(43) Veröffentlichungstag der Anmeldung: 30.11.2005
(73) Patentinhaber: Swisscom Mobile AG, 3050 Bern (CH)
(72) Erfinder: Ritter, Rudolf, 3052 Zollikofen (CH)
(74) Vertreter: Scheuzger, Beat Otto

(56) Entgegenhaltungen:
- WO-A-02/51170
- DE-A- 10 127 265
- US-A- 4 658 416

## Beschreibung

Die vorliegende Erfindung betrifft ein Verfahren und ein System zur automatisierten Rufumleitung von für ein Mobilfunkgerät bestimmten Anrufen auf ein zweites Netzwerkgerät.

In den letzten Jahren ist die Zahl der Mobilfunkgerätebenutzer rasant gestiegen. Inzwischen verfügen viele Personen sowohl über Netzwerkgeräte, welche über ein Festnetz angeschlossen sind, wie z.B. ein Festnetzgerät zu Hause oder im Geschäft, als auch über ein Mobilfunkgerät. Verfahren und Systeme zur Rufumleitung sind deshalb in verschiedenen Ausführungsvarianten bekannt, wie z.B. der Rufumleitung von einem Festnetzgerät auf ein zweites Festnetzgerät oder der Rufumleitung von einem Mobilfunkgerät auf ein zweites Festnetzgerät. Aus der Patentschrift US 6,446,127 B1 ist beispielsweise ein Verfahren bekannt, bei dem ein Benutzer eines Personal Information Device (PID) Daten an eine Zentraleinheit eines Telefonnetzes übermitteln kann, wobei aufgrund dieser Daten eine Rufumleitung von ankommenden Anrufen erfolgt. Ein Nachteil dieses Verfahrens ist es allerdings, dass der Benutzer die Aktivierung einer Rufumleitung selber verwalten muss und dass er es beispielsweise vergessen kann, eine aktivierte Rufumleitung wieder auszuschalten.

In der Patentanmeldung DE 101 27 265 wird ein Verfahren zum Umleiten von Anrufen beschrieben, wobei ein erstes Telefon und ein zweites Telefon mit einem Netzwerk verbindbar sind, und wobei eine Anrufumleitung mittels dem ersten oder dem zweiten Telefon aktiviert wird, sobald das erste Telefon über eine direkte Verbindung (wie z.B. über eine Bluetooth Verbindung) mit dem zweiten Telefon verbindbar ist. Diese Anordnung hat jedoch insbesondere den Nachteil, dass das Verfahren nur mit Telefonen durchführbar ist, welche direkt miteinander verbindbar sind. Diese Voraussetzung ist jedoch für eine sehr grosse Anzahl der installierten Telefone nicht gegeben.

Die Patentanmeldung WO 02/51170 bezieht sich auf ein Radiotelefon, wobei das Radiotelefon eingerichtet ist um mit einem kompatiblen Radiotelefon über ein Telekommunikationsnetzwerk zu kommunizieren, wobei das Radiotelefon einen Detektor zur Detektion und Identifikation eines kompatiblen Radiotelefons umfasst, und wobei das Radiotelefon einen Kontroller umfasst, mit welchem Anrufe an das kompatible Radiotelefon auf das Radiotelefon umleitbar sind. Ein solches Radiotelefon hat jedoch den Nachteil, dass nur Anrufe an kompatible Radiotelefone auf das Radiotelefon umleitbar sind. Ein solches Radiotelefon hat deswegen nur einen sehr beschränkten Verwendungszweck.

Es ist eine Aufgabe der vorliegenden Erfindung, ein Verfahren und System zur automatisierten Rufumleitung von für ein Mobilfunkgerät bestimmten Anrufen auf ein zweites Netzwerkgerät vorzuschlagen, welches die Nachteile des Standes der Technik nicht hat.

Gemäss der vorliegenden Erfindung werden diese Ziele insbesondere dadurch erreicht, dass ein Detektionsmodul das Mobilfunkgerät detektiert, sobald es sich im Wirkungsbereich einer Schnittstelle zwischen dem Mobilfunkgerät und einem Customer Premises Equipment (CPE) eines dritten Kommunikationsnetzwerkes befindet, und dass Identifizierungsdaten des Mobilfunkgeräts über die Schnittstelle zwischen dem Mobilfunkgerät und dem CPE übertragen werden, und dass basierend auf Identifizierungsdaten des Mobilfunkgeräts über das dritte Kommunikationnetzwerk die Rufumleitung von für das Mobilfunkgerät bestimmten Anrufen auf das zweite Netzwerkgerät aktiviert wird, solange sich das Mobilfunkgerät im Wirkungsbereich der Schnittstelle zwischen dem Mobilfunkgerät und dem CPE befindet. Ein solches Verfahren hat den Vorteil, dass sowohl die Aktivierung als auch die Deaktivierung der Rufumleitung automatisiert erfolgt.

In einer Ausführungsvariante werden Identifizierungsdaten des Mobilfunkgeräts und/oder Identifizierungsdaten des zweiten Netzwerkgeräts über eine Netzwerkschnittstelle zwischen dem CPE und mindestens einer Zentraleinheit des dem Mobilfunkgerät zugeordneten Mobilfunknetzwerkes übertragen. Ein solches Verfahren hat den Vorteil, dass die Aktivierung bzw. die Deaktivierung der Rufumleitung auch dann erfolgen kann, wenn das Mobilfunkgerät keine Netzwerkverbindung zum Mobilfunknetzwerk hat, wie dies beispielsweise in einem Keller der Fall sein kann. Für das Beispiel eines Kellers kann die Rufumleitung beispielsweise auf ein in diesem Keller installiertes Festnetzgerät erfolgen.

Erfindungsgemäss erfolgt die Detektion des Mobilfunkgeräts durch ein Detektionsmodul, welches im CPE angebracht ist. Ein solches Verfahren hat den Vorteil, dass bestehende elektronische Geräte für die Anbringung des Detektionsmoduls verwendet werden können.

In einer Ausführungsvariante werden Identifizierungsdaten des zweiten Netzwerkgeräts über die Schnittstelle zwischen dem Mobilfunkgerät und dem CPE übertragen. Ein solches Verfahren hat den Vorteil, dass die Rufumleitung gemäss einer auf dem Mobilfunkgerät konfigurierten Liste erfolgen kann, womit beispielsweise der Benutzer des Mobilfunkgeräts die Rufumleitung selbständig konfigurieren kann.

In einer Ausführungsvariante werden Identifizierungsdaten des CPE über die Schnittstelle zwischen dem Mobilfunkgerät und dem CPE übertragen. Ein solches Verfahren hat den Vorteil, dass beispielsweise auf dem Mobilfunkgerät eine Liste mit Identifizierungseinträgen von verschiedenen CPE und von diesen CPE zugeordneten zweiten Netzwerkgeräten konfiguriert werden kann, womit beispielsweise für verschiedene CPE auch verschiedene Rufumleitungen vom Benutzer selbständig konfiguriert werden können.

In einer Ausführungsvariante werden für abgehende Anrufe des zweiten Netzwerkgeräts Identifikationsdaten des Mobilfunkgeräts verwendet. Dazu können beispielsweise Identifikationsdaten des Mobilfunkgeräts des zweiten Netzwerkgeräts über eine Bluetooth Schnittstelle oder irgendeine andere Schnittstelle an das zweite Netzwerkgerät übertragen werden, womit abgehende Anrufe des zweiten Netzwerkgeräts unter Verwendung von Identifikationsdaten des Mobilfunkgeräts durchgeführt werden können. Dabei kann das zweite Netzwerkgerät beispielsweise ein Speichermodul wie z.B. ein SIM (Subscriber Identity Module) umfassen. Ein solches Verfahren hat den Vorteil, dass ein Anruf, welcher unter Verwendung des zweiten Netzwerkgeräts ausgeführt wird, beispielsweise über die Nummer des Mobilfunkgeräts abgerechnet werden kann.

In einer Ausführungsvariante bezieht sich das Verfahren zur Rufumleitung auf die Rufumleitung von für ein erstes Netzwerkgerät bestimmten Anrufen auf ein zweites Netzwerkgerät, wobei ein Detektionsmodul eines Customer Premises Equipment (CPE) das Mobilfunkgerät detektiert, sobald es sich im Wirkungsbereich einer Schnittstelle zwischen dem Mobilfunkgerät und dem CPE befindet, und wobei Identifizierungsdaten des Mobilfunkgeräts über die Schnittstelle zwischen dem Mobilfunkgerät und dem CPE übertragen werden, und wobei basierend auf Identifizierungsdaten des Mobilfunkgeräts die Rufumleitung von für das erste Netzwerkgerät bestimmten Anrufen auf das zweite Netzwerkgerät aktiviert wird, solange sich das Mobilfunkgerät im Wirkungsbereich der Schnittstelle zwischen dem Mobüfunkgerät und dem CPE befindet. Ein solches Verfahren hat den Vorteil, dass beispielsweise die Rufumleitung von einer ersten Festnetznummer auf eine zweite Festnetznummer automatisiert erfolgen kann.

In einer Ausführungsvariante des Verfahrens zur Rufumleitung erfolgt die Aktivierung bzw. die Deaktivierung der Rufumleitung über eine Netzwerkschnittstelle zwischen dem Customer Premises Equipment (2) und mindestens einer Zentraleinheit eines Telekommunikationsnetzwerks. Ein solches Verfahren hat den Vorteil, dass eine Rufumleitung auch ohne Verbindung des Mobilfunkgeräts zum Mobilfunknetzwerk aktiviert bzw. deaktiviert werden kann.

In einer Ausführungsvariante des Verfahrens zur Rufumleitung erfolgt die Aktivierung bzw. die Deaktivierung der Rufumleitung über eine Netzwerkschnittstelle zwischen dem Mobilfunkgerät (1) und mindestens einer Zentraleinheit eines Telekommunikationsnetzwerks. Ein solches Verfahren hat den Vorteil, dass eine Rufumleitung auch ohne Verbindung des Customer Premises Equipment zu einem Telekommunikationsnetzwerk aktiviert bzw. deaktiviert werden kann.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben; die Beispiele der Ausführungen werden durch folgende beigelegte Figur illustriert:

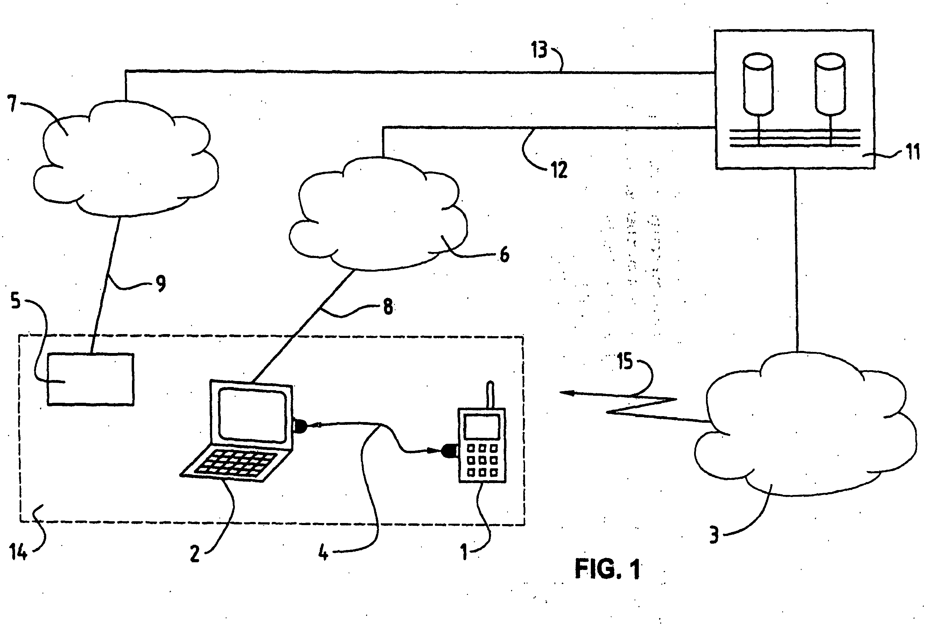

Figur 1 zeigt ein Blockdiagramm, welches schematisch ein Verfahren und ein System zur automatischen, temporären Rufumleitung von für ein Mobilfunkgerät bestimmten Anrufen auf eine Festnetznummer illustriert.

In Figur 1 bezieht sich das Bezugszeichen 1 auf ein Mobilfunkgerät und das Bezugszeichen 2 bezieht sich auf ein Customer Premises Equipment (CPE). Das Mobilfunkgerät 1 kann irgend ein Mobilfunkgerät von irgendeinem Mobilfunknetzwerk 3 sein; beispielsweise ist das Mobilfunkgerät ein GSM Gerät eines GSM Mobilfunknetzwerks, oder ein UMTS Gerät eines UMTS Netzwerks, oder ein Satelliten Gerät eines Satelliten Netzwerks. Das CPE 2 kann beispielsweise ein handelsüblicher Personal Computer (PC), ein tragbarer PC, ein analoges oder digitales Modem, ein xDSL Modem (wobei das xDSL Modem beispielsweise ein ADSL-, SDSL-, HDSL- oder VDSL-Modem sein kann), ein Festnetztelefon, ein Ladegerät für ein Mobilfunkgerät, ein Kühlschrank oder irgendein anderes Gerät mit elektronisch vernetzten Komponenten sein.

In Figur 1 bezieht sich das Bezugszeichen 4 auf eine Schnittstelle zwischen dem Mobilfunkgerät und dem CPE 2. Die Schnittstelle 4 kann eine Bluetooth Schnittstelle, eine Infrarot Schnittstelle, eine WLAN Schnittstelle oder irgendeine andere kontaktlose Schnittstelle sein. Die Schnittstelle 4 zwischen dem Mobilfunkgerät 1 und dem CPE 2 kann aber auch eine USB Schnittstelle, eine Firewire Schnittstelle oder irgendeine andere kontaktbehaftete Schnittstelle sein. Die Schnittstelle 4 zwischen dem Mobilfunkgerät und dem CPE kann insbesondere auch eine kontaktbehaftete Schnittstelle sein, die beispielsweise neben einer USB Schnittstelle zugleich auch eine Stromversorgung, beispielsweise zur Aufladung des Mobilfunkgeräts, umfasst oder die Schnittstelle 4 kann beispielsweise eine Schnittstelle zur Stromversorgung sein, die zugleich auch eine Schnittstelle zur Übertragung von Daten umfasst. Es ist beispielsweise auch möglich, dass gleichzeitig mehrere Schnittstellen zwischen dem Mobilfunkgerät 1 und dem CPE 2 vorhanden sind. Mittels der Schnittstelle 4 kann beispielsweise ein Detektionsmodul des CPE 2 das Mobilfunkgerät 1 detektieren, sobald es sich im Wirkungsbereich der Schnittstelle 4 befindet, beispielsweise sobald es sich im Sende/Empfangsbereich einer kontaktlosen Schnittstelle wie einer Bluetooth Schnittstelle befindet oder sobald es mittels einer kontaktbehafteten Schnittstelle wie einer USB Schnittstelle eingesteckt wird. Durch die Übertragung von Identifizierungsdaten des Mobilfunkgeräts über eine solche Schnittstelle kann, beispielsweise mittels eines weiter unten beschriebenen Service Applets des CPE 2, das Mobilfunkgerät 1 identifiziert werden. Die Identifizierungsdaten können beispielsweise eine Kennung eines Service Applets des Mobilfunkgeräts, die Rufnummer des Mobilfunkgeräts, die international Mobile Equipment Identity (IMEI), die International Mobile Subscriber Identity (IMSI) oder irgendeine andere Kennung zur Identifikation des Mobilfunkgeräts umfassen. Die Identifizierungsdaten können z.B. auf einem Speichermodul wie beispielsweise einer SIM-Karte abgespeichert sein.

In Figur 1 bezieht sich das Bezugszeichen 5 auf ein zweites Netzwerkgerät. Das zweite Netzwerkgerät 5 kann beispielsweise ein Festnetztelefon, ein Haustelefon, ein mobiles Haustelefon, ein Internettelefon oder irgend ein anderes Netzwerkgerät zur Sprach- und/oder Datenkommunikation sein. Das zweite Netzwerkgerät 5 kann beispielsweise auch in das CPE 2 integriert sein, beispielsweise als eine Internettelefonapplikation eines PC. Wie oben erwähnt, kann das CPE 2 auch ein Festnetztelefon mit beispielsweise einer Bluetooth Schnittstelle sein. Das CPE 2 kann aber auch z.B. als Zusatzgerät ausgeführt sein, welches beispielsweise in die Wandsteckdose des Festnetztelefons oder in eine Stromsteckdose eines Stromnetzes eingesteckt werden kann. Das CPE 2 kann beispielsweise auch ein ein Power-line Communications (PLC) Gerät sein mit einer Kommunikationsvorrichtung für die Kommunikation über das Stromnetz sein.

In Figur 1 beziehen sich die Bezugszeichen 6 und 7 auf irgendwelche Telekommunikationsnetzwerke. Die Telekommunikationsnetzwerke 6, 7 können beispielsweise ein Public Switched Telephone Network (PSTN), ein auf Netzwerken wie beispielsweise Ethernet, WLAN, Bluetooth, Token Ring oder analog bzw. digital verbundenes Modern oder xDSL Modem basiertes Internet, ein landbasiertes oder sätellitenbasiertes Mobilfunknetz, ein stromnetzbasiertes PLC Netzwerk oder irgend ein anderes Telekommunikationsnetzwerk sein. In einer Ausführungsvariante kann es vorteilhaft sein, dass die Telekommunikationsnetzwerke 6 und 7 nicht getrennte Netzwerke, sondem nur ein einziges Telekommunikationsnetzwerk sind und beispielsweise nur als PSTN ausgeführt sind.

In Figur 1 beziehen sich die Bezugszeichen 8 bzw. 9 auf die Netzwerkverbindung des CPE 2 mit dem Telekommunikationsnetzwerk 6 bzw. auf die Netzwerkverbindung des zweiten Netzwerkgeräts 5 mit dem Telekommunikationsnetzwerk 7. Die Netzwerkverbindungen können irgendwelche Verbindungen zu einem PSTN, zu einem Internet, einem Mobilfunknetz oder irgend einem anderen Telekommunikationsnetzwerk umfassen.

In Figur 1 bezieht sich das Bezugszeichen 11 auf eine Zentraleinheit 11 des dem Mobilfunkgerät zugeordneten Mobilfunknetzwerks. Die Zentraleinheit 11 kann beispielsweise ein Home Location Register (HLR), ein Visiting Location Register (VLR), ein Mobile Switching Center (MSC) und/oder ein entsprechendes Register umfassen.

In Figur 1 beziehen sich die Bezugszeichen 12 bzw. 13 auf eine Netzwerkverbindung zwischen dem Telekommunikationsnetzwerk 6 und der Zentraleinheit 11 bzw. zwischen dem Telekommunikationsnetzwerk 7 und der Zentraleinheit 11.

In Figur 1 bezieht sich das Bezugszeichen 14 auf den Wirkungsbereich 14 der Schnittstelle zwischen dem Mobilfunkgerät 1 und dem CPE 2. Das Bezugszeichen 15 bezieht sich auf den Sende-/Empfangsbereich 15 des Mobilfunkgeräts/-netzwerks. In einer Ausführungsvariante befindet sich das Mobilfunkgerät 1 zwar im Wirkungsbereich 14 der Schnittstelle zwischen dem Mobilfunkgerät 1 und dem CPE 2, es befindet sich jedoch ausserhalb des Sende-/Empfangsbereichs 15 des MobiLfunkgeräts/-netzwerks.

In einer Ausführungsvariante der erfindungsgemässen Lösung werden beispielsweise über eine Service-URL des Mobilfunknetzoperators so genannte Service Applets zur Verfügung gestellt. Service Applets werden beispielsweise paarweise, z.B. mit paarweise zugeordneten Identifikationsdaten, als Service Applet für ein Mobilfunkgerät und als Service Applet für ein CPE zur Verfügung gestellt und können von einem Benutzer je auf ein Mobilfunkgerät 1 und auf ein CPE 2 geladen werden. Beispielsweise kann das Service Applet des CPE 2 ein Detektionsmodul umfassen, wobei das Mobilfunkgerät detektiert wird, sobald es sich im Wirkungsbereich 14 einer Schnittstelle zwischen dem Mobilfunkgerät und dem CPE befindet. Anschliessend kann beispielsweise das Service Applet des CPE vom Service Applet des Mobilfunkgeräts Identifikationsdaten anfordem und gemäss diesen Identifikationsdaten die Rufumleitung von für das Mobilfunkgerät 1 bestimmten Anrufen auf ein zweites Netzwerkgerät 5 aktivieren, solange sich das Mobilfunkgerät 1 im Wirkungsbereich 14 der Schnittstelle zwischen dem Mobilfunkgerät und dem CPE befindet

Das Service Applet des CPE kann beispielsweise eine Liste mit Einträgen von Identifikationsdaten von Mobilfunkgeräten und mit Identifikationsdaten von zweiten Netzwerkgeräten enthalten. Eine solche Liste kann aber beispielsweise auch auf dem Mobilfunkgerät konfiguriert sein oder sie kann beispielsweise auch auf einer Zentraleinheit eines Telekommunikationsnetzwerks konfiguriert sein. Eine solche Liste kann aber auch dynamisch erzeugt werden, indem beispielsweise das CPE über eine geeignete Schnittstelle detektiert, ob geeignete zweite Netzwerkgeräte verfügbar sind.

Das Service Applet des CPE kann dann beispielsweise im Home Location Register (HLR), im Visiting Location Register (VLR) und/oder in einem entsprechenden Register, unter Verwendung von Identifikationsdaten des Mobilfunkgeräts und von Identifikationsdaten von zweiten Netzwerkgeräten, eine Rufumleitung von für ein Mobilfunkgerät bestimmten Anrufen auf ein zweites Netzwerkgerät aktivieren oder deaktivieren.

Um festzustellen, ob eine Deaktivierung einer Rufumleitung notwendig ist, kann beispielsweise in einer Zentraleinheit 11 des dem Mobilfunkgerät zugeordneten Mobilfunknetzwerks ein Deaktivierungsmodul vorgesehen sein, wobei das Deaktivierungsmodul zu bestimmten Zeitpunkten, wie z.B. nach Ablauf eines bestimmten Zeitintervalls, beispielsweise das Service Applet des CPE auffordert, die Gültigkeit der aktuellen Rufumleitung zu bestätigen. Eine Deaktivierung kann aber beispielsweise auch vom Service Applet des CPE ausgelöst werden, sobald sich das Mobilfunkgerät nicht mehr im Wirkungsbereich der Schnittstelle 4 befindet.

Es ist darauf hinzuweisen, dass statt einem Detektionsmodul zur Detektion eines Mobilfunkgeräts auch ein RFID (Radio frequency identification) Transceiver zur Detektion von RFID Transpondem verwendet werden kann. Beispielsweise kann der RFID Transceiver eine Rufumleitung aktivieren, sobald ein bestimmter RFID Transponder (welcher auch RFID Tag genannt werden kann) detektiert wird. Der RFID Transponder kann von einem Benutzer beispielsweise auch für andere Zwecke wie der Zutrittskontrolle, der Zeitkontrolle oder für irgendeine andere Anwendung benutzt werden. Der RFID Transceiver kann beispielsweise so eingerichtet sein, dass der RFID Tags über grössere Distanzen wie beispielsweise innerhalb eines bestimmten Raums detektiert werden. Der RFID Transceiver kann aber beispielsweise auch so eingerichtet sein, dass RFID Tags nur über kürzere Distanzen detektiert werden, sodass ein Benutzer den RFID Tag für die Aktivierung der Rufumleitung beispielsweise kurzzeitig auf den RFID Transponder legen muss. Die Rufumleitung kann beispielsweise solange aktiviert bleiben wie ein bestimmter RFID Tag durch den RFID Transceiver detektierbar ist. Die Rufumleitung kann beispielsweise auch bei einer ersten Detektion eines bestimmten RFID Tags aktiviert werden und bei einer zweiten Detektion dieses RFID Tags wieder deaktiviert werden. Die Rufumleitung kann beispielsweise auch bei der Detektion eines ersten RFID Tags aktiviert werden und bei der Detektion eines zweiten RFID Tags wieder deaktiviert werden.

## Patentansprüche

1. Verfahren zur automatisierten Rufumleitung von für ein Mobilfunkgerät (1) bestimmten Anrufen auf ein zweites Netzwerkgerät (5) eines zweiten Kommunikationsnetzwerkes, **dadurch gekennzeichnet,**
**dass** mittels eines in einem Customer Premises Equipment (2) eines dritten Kommunikationsnetzwerkes angebrachten Detektionsmoduls detektiert wird, sobald sich das Mobilfunkgerät (1) im Wirkungsbereich einer Schnittstelle (4) zwischen dem Mobilfunkgerät und dem Customer Premises Equipment (2) befindet, und
**dass** Identifizierungsdaten des Mobilfunkgeräts über die Schnittstelle (4) zwischen dem Mobilfunkgerät und dem Customer Premises Equipment (2) übertragen werden, und
**dass** basierend auf ldentifizierungsdaten des Mobilfunkgeräts über das dritte Kommunikationsnetzwerk die Rufumleitung von für das Mobilfunkgerät (1) bestimmten Anrufen auf das zweite Netzwerkgerät (5) aktiviert wird, solange sich das Mobilfunkgerät (1) im Wirkungsbereich (4) der Schnittstelle zwischen dem Mobilfunkgerät (1) und dem Customer Premises Equipment (2) befindet.

2. Verfahren nach Anspruch 1, **dadurch gekennzeichnet, dass** ldentifizierungsdaten des Mobilfunkgeräts (1) und/oder Identifizierungsdaten des zweiten Netzwerkgeräts (5) mittels des dritten Kommunikationsnetzwerkes über eine Netzwerkschnittstelle (8) zwischen dem Customer Premises Equipment (2) und mindestens einer Zentraleinheit (11) des dem Mobilfunkgerät zugeordneten Mobilfunknetzwerks (3) übertragen werden.

3. Verfahren nach einem der Ansprüche 1 bis 2, **dadurch gekennzeichnet, dass** Identifizierungsdaten des zweiten Netzwerkgeräts (5) über die Schnittstelle (4) zwischen dem Mobilfunkgerät und dem Customer Premises Equipment übertragen werden.

4. Verfahren nach einem der Ansprüche 1 bis 3, **dadurch gekennzeichnet, dass** Identifizierungsdaten des Customer Premises Equipment (2) über die Schnittstelle (4) zwischen dem Mobilfunkgerät und dem Customer Premises Equipment übertragen werden.

5. Verfahren nach einem der Ansprüche 1 bis 4, **dadurch gekennzeichnet, dass** für abgehende Anrufe des zweiten Netzwerkgeräts (5) Identifikationsdaten des Mobilfunkgeräts verwendet werden.

6. System zur automatisierten Rufumleitung von für ein Mobilfunkgerät (1) bestimmten Anrufen auf ein zweites Netzwerkgerät (5) eines zweiten Kommunikationsnetzwerkes, **dadurch gekennzeichnet,**
**dass** ein in einem Customer Premises Equipment (2) eines dritten Kommunikationsnetzwerkes angebrachtes Detektionsmodul Mittel zur Detektion von mindestens einer verfügbaren Schnittstelle (4) zwischen dem Mobilfunkgerät (1) und dem Customer Premises Equipment (2) umfasst, und
**dass** das System Mittel zur Übertragung von Identifizierungsdaten des Mobilfunkgeräts über die Schnittstelle (4) zwischen dem Mobilfunkgerät (1) und dem Customer Premises Equipment (2) umfasst, und
**dass** das System auf dem dritten Kommunikationsnetzwerk basierte Mittel zur Rufumleitung von für das Mobilfunkgerät bestimmten Anrufen auf das zweite Netzwerkgerät (5) umfasst.

7. System nach Anspruch 6, **dadurch gekennzeichnet, dass** das Customer Premises Equipment (2) auf dem dritten Kommunikationsnetzwerk basierte Mittel zur Übertragung von Identifizierungsdaten des Mobilfunkgeräts (1) und/oder zur Übertragung von Identifizierungsdaten des zweiten Netzwerkgeräts (5) an mindestens eine Zentraleinheit (11) des dem Mobilfunkgerät zugeordneten Mobilfunknetzwerks (3) umfasst.

8. System nach einem der Ansprüche 6 bis 7, **dadurch gekennzeichnet, dass** das System Mittel zur Übertragung von Identifizierungsdaten des zweiten Netzwerkgeräts (5) über die Schnittstelle (4) zwischen dem Mobilfunkgerät und dem Customer Premises Equipment umfasst.

9. System nach einem der Ansprüche 6 bis 8, **dadurch gekennzeichnet, dass** das System Mittel zur Übertragung von Identifizierungsdaten des Customer Premises Equipment (2) über die Schnittstelle (4) zwischen dem Mobilfunkgerät und dem Customer Premises Equipment umfasst.

10. System nach einem der Ansprüche 6 bis 9, **dadurch gekennzeichnet, dass** das System für abgehende Anrufe des zweiten Netzwerkgeräts (5) Mittel zur Verwendung von Identifikationsdaten des Mobilfunkgeräts (1) umfasst.

## Claims

1. Method for automated call redirection of calls intended for a mobile radio device (1) to a second network device (5) of a second communication network, **characterised**
**in that** as soon as the mobile radio device (1) is located in the activity range of an interface (4) between the mobile radio device (1) and a CPE (Customer Premises Equipment) (2) of a third communication network, it is detected by means of a detection module installed in the customer premises equipment (2), and
identification data of the mobile radio device are transmitted via the interface (4) between the mobile radio device and the customer premises equipment (2), and
**in that**, based on the identification data of the mobile radio device, the redirection of calls intended for the mobile radio device (1) is activated over the third communication network to the second network device (5) as long as the mobile radio device (1) is located in the activity range (4) of the interface between the mobile radio device (1) and the customer premises equipment (2).

2. Method according to claim 1, **characterised in that** identification data of the mobile radio device (1) and/or identification data of the second network device (5) are transmitted by means of the third communication network via a network interface (8) between the customer premises equipment (2) and at least one central unit (11) of the mobile radio network (3) assigned to the mobile radio device.

3. Method according to one of the claims 1 to 2, **characterised in that** identification data of the second network device (5) are transmitted via the interface (4) between the mobile radio device and the customer premises equipment.

4. Method according to one of the claims 1 to 3, **characterised in that** identification data of the customer premises equipment (2) are transmitted via the interface (4) between the mobile radio device and the customer premises equipment.

5. Method according to one of the claims 1 to 4, **characterised in that** identification data of the mobile radio device are used for outgoing calls of the second network device (5)

6. System for automated call redirection of calls intended for a mobile radio device (1) to a second network device (5) of a second communication network, **characterised**
**in that** a detection module installed in a CPE (Customer Premises Equipment) (2) of a third communication network comprises means for detection of at least one available interface (4) between the mobile radio device (1) and the customer premises equipment (2), and
**in that** the system comprises means for transmitting identification data of the mobile radio device via the interface (4) between the mobile radio device (1) and the customer premises equipment (2), and
**in that** the system comprises means based on the third communication network for call redirection of calls intended for the mobile radio device to the second network device (5).

7. System according to claim 6, **characterised in that** the customer premises equipment (2) comprises means based on the third communication network for transmitting identification data of the mobile radio device (1) and/or for transmitting identification data of the second network device (5) to at least one central unit (11) of the mobile radio network (3) assigned to the mobile radio device.

8. System according to one of the claims 6 to 7, **characterised in that** the system comprises means for transmitting identification data of the second network device (5) via the interface (4) between the mobile radio device and the customer premises equipment.

9. System according to one of the claims 6 to 8, **characterised in that** the system comprises means for transmitting identification data of the customer premises equipment (2) via the interface (4) between the mobile radio device and the customer premises equipment.

10. System according to one of the claims 6 to 9, **characterised in that** for outgoing calls of the second network device (5) the system comprises means for using the identification data of the mobile radio device (1).

## Revendications

1. Procédé pour transfert d'appel automatisé d'appels destinés à un périphérique mobile (1) à un second périphérique de réseau (5) d'un second réseau de communication, **caractérisé**
**en ce qu'**au moyen d'un module de détection logé dans un équipement local d'abonné (2) d'un troisième réseau de communication, il est détecté dés que le périphérique de radiotéléphonie mobile (1) se trouve dans la zone d'action d'une interface (4) entre le terminal et l'équipement local d'abonné (2), et
**en ce que** des données d'identification du périphérique de radiotéléphonie mobile sont transmises par l'interface (4) entre le périphérique de radiotéléphonie mobile et l'équipement local d'abonné (2), et
**en ce qu'**en se basant sur des données d'identification du périphérique de radiotéléphonie mobile par l'intermédiaire du troisième réseau de communication, le transfert d'appels destinés au périphérique de radiotéléphonie mobile (1) au second périphérique de réseau (5) est activé tant que le périphérique de radiotéléphonie mobile (1) se trouve dans zone d'action (4) de l'interface entre le périphérique de radiotéléphonie mobile (1) et de l'équipement local d'abonné (2).

2. Procédé selon la revendication 1, **caractérisé en ce que** des données d'identification du périphérique de radiotéléphonie mobile (1) et/ou des données d'identification du second périphérique de réseau (5) sont transmises au moyen du troisième réseau de communication par une interface de réseau (8) entre l'équipement local d'abonné (2) et au moins une unité centrale (11) du réseau de radiotéléphonie mobile (3) associé au périphérique de radiotéléphonie mobile.

3. Procédé selon l'une des revendications 1 à 2, **caractérisé en ce que** les donnés d'identification du second périphérique de réseau (5) sont transmises par l'interface (4) entre le périphérique de radiotéléphonie mobile et l'équipement local d'abonné.

4. Procédé selon l'une des revendications 1 à 3, **caractérisé en ce que** des données d'identifications de l'équipement local d'abonné (2) sont transmises par l'interface (4) entre le périphérique de radiotéléphonie mobile et l'équipement local d'abonné (2).

5. Procédé selon l'une des revendications 1 à 4, **caractérisé en ce que** pour des appels sortants du second périphérique de réseau (5), des données d'identification du périphérique de radiotéléphonie mobile sont utilisées.

6. Système pour le transfert automatisé d'appels destinés à un périphérique mobile (1) à un second périphérique de réseau (5) d'un second réseau de communication, **caractérisé**
**en ce qu'**il comprend un moyen d'un module de détection logé dans un équipement local d'abonné (2) d'un troisième réseau de communication pour la détection d'au moins une interface disponible (4) entre le périphérique de radiotéléphonie mobile (1) et l'équipement local d'abonné (2) et
**en ce que** le système comprend des moyens pour la transmission de données d'identification du périphérique de radiotéléphonie mobile par l'interface (4) entre le périphérique de radiotéléphonie mobile (1) et l'équipement local d'abonné (2) et
**en ce que** le système comprend des moyens basés sur le troisième réseau de communication pour le transfert de certains appels destinés au périphérique de radiotéléphonie mobile au second périphérique de réseau (5).

7. Système selon la revendication 6, **caractérisé en ce que** l'équipement local d'abonné (2) comprend des moyens basés sur le troisième périphérique de réseau pour la transmission de données d'identification du périphérique de radiotéléphonie mobile (19) et/ou pour la transmission de données d'identifications du second périphérique de réseau (5) à au moins une unité centrale (11) du réseau de radiotéléphonie (3) associé au périphérique de radiotéléphonie mobile.

8. Système selon l'une des revendications 6 à 7, **caractérisé en ce que** le système comprend des moyens pour la transmission de données d'identification du second périphérique de réseau (5) par l'intermédiaire de l'interface (49) entre le périphérique de radiotéléphonie mobile et l'équipement local d'abonné.

9. Système selon l'une des revendications 6 à 8, **caractérisé en ce que** le système comprend des moyens pour la transmission de données d'identification de l'équipement local d'abonné (2) par l'intermédiaire de l'interface (4) entre le périphérique de radiotéléphonie mobile et l'équipement local d'abonné.

10. Système selon l'une des revendications 6 à 9, **caractérisé en ce que** le système comprend pour des appels sortant du second périphérique de réseau (5) des moyens pour l'utilisation de données d'identification du périphérique de radiotéléphonie mobile (1).
